Europäisches Patentamt

**European Patent Office**

Office européen des brevets

(19)

(11) Publication number: **0 037 183**
**B1**

(12) **EUROPEAN PATENT SPECIFICATION**

(45) Date of publication of patent specification: **11.04.84**

(51) Int. Cl.³: **F 16 H 1/42, F 16 H 3/66**

(21) Application number: **81300940.4**

(22) Date of filing: **06.03.81**

(54) **Planetary differential.**

(30) Priority: **31.03.80 PC T/US80/00347**

(43) Date of publication of application:
**07.10.81 Bulletin 81/40**

(45) Publication of the grant of the patent:
**11.04.84 Bulletin 84/15**

(84) Designated Contracting States:
**FR GB IT**

(56) References cited:
**DE - B - 1 103 152**
**US - A - 2 648 236**
**US - A - 3 144 107**
**US - A - 3 377 885**
**US - A - 3 383 953**
**US - A - 4 117 744**
**US - A - 4 184 387**

(73) Proprietor: **CATERPILLAR TRACTOR CO.**
**100 Northeast Adams Street**
**Peoria Illinois 61629 (US)**

(72) Inventor: **Winzeler, James E.**
**221, Coventry Lane**
**East Peoria Illinois 61611 (US)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

Planetary differential

The invention relates to a planetary differential incorporating a multi-speed capability in a compact and simplified manner.

While there a large number of vehicles such as earthmoving tractors and military tanks that have utilized multi-speed cross drive transmissions, the transmissions have incorporated an excessive number of gears and associated elements, and have generally been overly complex and costly in construction. In some cases multiple speeds for the driving ground-engaging members have been achieved by merely duplicating a plurality of planetary sets and operating brakes and clutches on the left and right sides, with such brakes and clutches controlling one or more reaction members independently of the operation on the opposite side of the vehicle.

Another deficiency with prior cross drive mechanisms is that the rotating members thereof have been arranged on a plurality of transverse axes so that the construction was not only costly, but also required an excessively large housing for containment of the components.

Still another deficiency is that such cross drive transmissions have not simultaneously provided a true differential function wherein the drive torques at the opposite sides of the vehicle are continuously equalized. For example, differential steering mechanisms have heretofor been proposed which force one output member to increase in speed while simultaneously forcing the opposite output member to decrease in speed by acting on one element of a pair of oppositely disposed planetary sets. This is achieved by a cross shaft or bevel gear drive connection between such elements and separate from the input drive that interferes with the true differential function and causes unequal torques to be imposed upon the output members. Moreover, hydrostatic drive units have been employed for steering purposes in many of the earlier mechanisms, but the mixture of hydrostatic and mechanical drive unduly complicates the construction and requires an excessive amount of space.

US—A—2,648,236 discloses a planetary gear differential but this makes no provision for driving the output members in a plurality of reduced speeds.

In accordance with the present invention, a planetary differential comprises first and second planetary sets each set having ring, sun and carrier elements; first and second input members connected to first ones of the elements of the first and second planetary sets respectively, a second one of the elements of the first planetary set being connected for joint rotation to a second one of the elements of the second planetary set; a rotary input member; and means for driving the output members at substantially equal levels of torque in a plurality of speeds, the means being driven by the rotary input member and selectively or permanently driving the remaining third one of the elements of the second planetary set in at least one of the plurality speeds, the remaining third one of the elements of the first planetary set being selectively or permanently driven by one of the input member and the means whereby true differential action is maintained.

By the phrase "plurality of speeds" we include one forward and one reverse speed. Thus, a compact multispeed differential is provided having a true differential action and a minimum number of components which can preferably be arranged along a common, preferably transverse, axis in a concentric manner. The multispeed differential is simple and economic to manufacture, and may incorporate a built-in reduction or speed step down capability so that it can be relatively closely coupled to a driving engine without the need for an additional reduction gear train.

Advantageously, the means may include a multispeed unit comprising a third planetary set, preferably with one brake assembly and a clutch assembly or two brake assemblies connected to preselected ones of the ring, sun and/or carrier elements thereof. It has been found to be particularly desirable, for example, to connect the sun elements of the first and second planetary sets for joint rotation and to connect the output members to the ring or carrier elements of the first and second planetary sets for joint rotation.

The compactness and simplicity of the interconnected planetary sets above described is particularly desirable in the cross drive of a fork lift truck, earthmoving vehicle or the like where space is at a premium. In particular, where the planetary sets and first and second output members are mounted about a common axis, the space and mounting complexities heretofor apparent with prior art multi-axis constructions are obviated.

The ring elements of the first and second planetary sets may be connected directly to rotate the left and right wheels so as not only to provide an equal torque or true differential function, but also to provide a speed reduction from the input member without the added necessity of incorporating an intermediate gear train for that purpose.

Some examples of planetary differentials in accordance with the present invention are illustrated in the accompanying drawings, in which:—

Figure 1 is a diagrammatic, partial cross-section of one example connected to a directional transmission unit;

Figure 2 is a schematic diagram of the planetary differential shown in Figure 1;

Figure 3 is a more detailed schematic diagram of the planetary differential illustrated in Figure 1 including, in phantom lines, an optional rotating clutch assembly;

Figure 4 is a schematic diagram of a second example of a differential which provides four speeds;

Figure 5 is a schematic diagram of a third example;

Figure 6 is a more detailed schematic diagram of the planetary differential illustrated in Figure 5;

Figure 7 is a schematic diagram of a fourth example;

Figure 8 is a schematic diagram of a fifth example;

Figure 9 is a schematic diagram of a sixth example; and

Figure 10 is a schematic diagram of a seventh example.

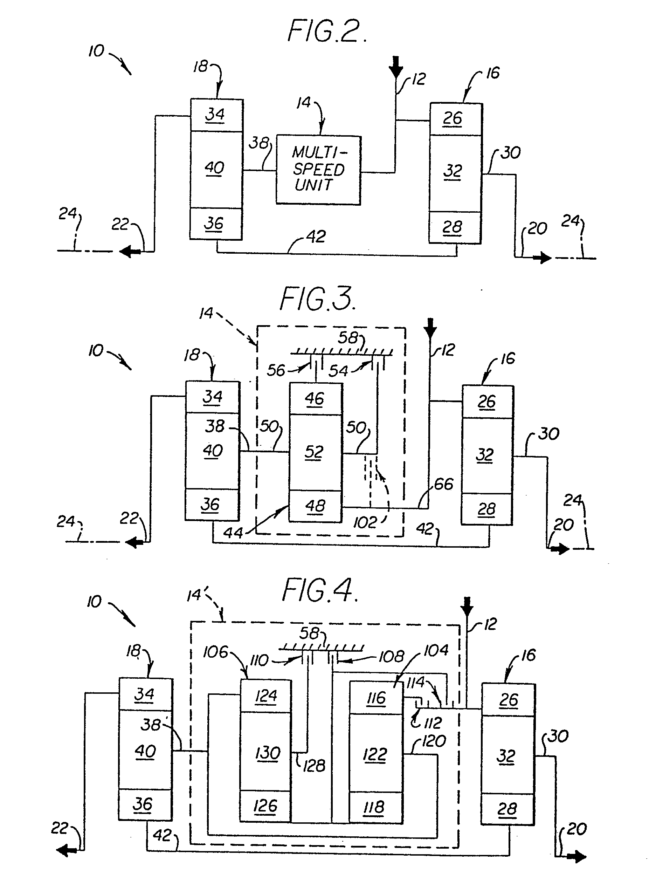

Referring initially to the diagrammatic drawing of Figure 2, a multi-speed planetary differential 10 is shown in simplified form which has a driven rotary input member or gear 12, a multi-speed unit 14, first and second planetary sets 16 and 18, and first and second output members 20 and 22 that are generally aligned on a vehicle cross drive axis 24 disposed normal to the usual forward and reverse direction of vehicle travel.

The first planetary set 16 includes ring, sun and carrier elements 26, 28 and 30 of the usual type wherein a plurality of similar planet elements 32 are rotatably mounted on the carrier element and are in intermeshing engagement with the ring and sun elements. In the instant example the carrier element 30 is connected to the first or right output member 20. The second planetary set 18 also includes ring, sun and carrier elements 34, 36 and 38, and a plurality of planet elements 40 rotatably mounted in equally spaced peripheral relationship on the carrier element. As is illustrated, the ring element 34 is connected to the second or left output member 22. Advantageously, the input member 12 is connected to the ring element 26 as well as to the multi-speed unit 14 to provide a common rotary drive. The output of the multi-speed unit is connected to the carrier element 38 of the second planetary set 18, and the sun elements 28 and 36 are connected together by a cross shaft 42 to complete the power flow path within the differential 10. Thus, in the broadest aspects of the construction illustrated in Fig. 2 the multi-speed unit 14 can provide two, three, four or even more speed steps and optional reversing capability to the first and second output members 20, 22 in a compact and economical manner, as well as providing a true differential action by continually delivering equal torque to the opposite output members and for accommodating unequal rotational speeds of the output members such as can typically occur with vehicle tyres.

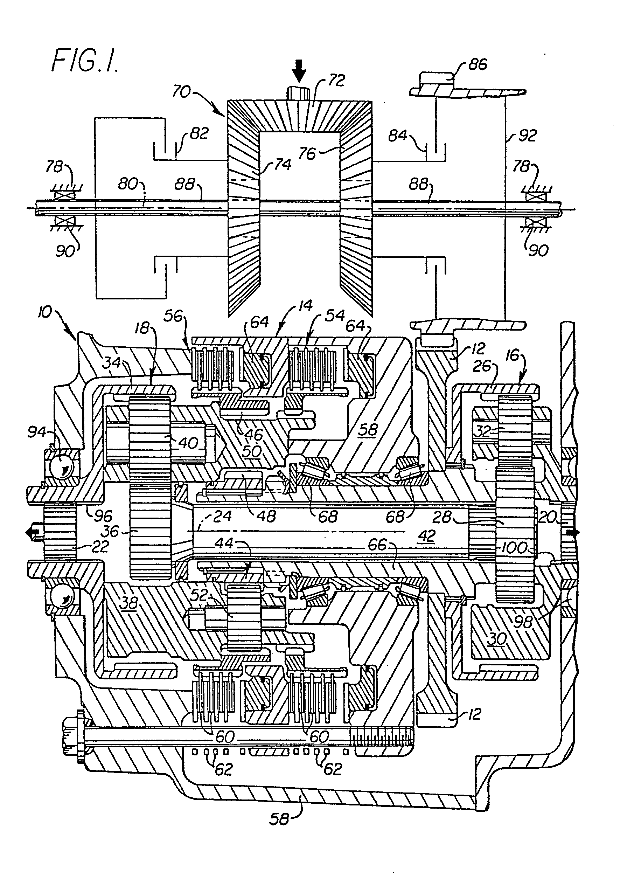

More specifically, and with reference now to Figs. 1 and 3, one multi-speed unit 14 can be noted to include a third planetary set 44 having ring, sun and carrier elements 46, 48 and 50 and a plurality of planet elements 52 rotatably mounted on the carrier element and in meshing engagement with the ring and sun elements. As can be noted from the instant example, the carrier element 50 and the carrier element 38 of the third and second planetary sets are integral with one another. The multi-speed unit further includes first and second brake assemblies generally designated by the reference numbers 54 and 56 respectively which, when actuated, connect the carrier or ring elements 50 and 46 to a fixed cross drive housing 58. These brake assemblies can be of conventional construction, and are illustrated as having a plurality of interleaved discs and plates 60, 62 which are respectively disposed in non-rotary but axially sliding engagement with the stationary housing and the rotating element. An annular piston 64 associated with each of the brake assemblies is nested in the housing so as to be moved to the left when viewing Fig. 1 by hydraulic fluid appropriately directed thereto for engaging the respective brake assembly. The pistons of the brake assemblies are urged back to the right toward their disengaged positions by coiled compression springs or the like, not shown. In the instant example the engagement of the first brake assembly 54 provides a low speed drive and the engagement of the second brake assembly 56 provides an intermediate speed drive.

A hollow input shaft 66 is rotatably supported within the housing 58 on a pair of opposed tapered bearing assemblies 68 in concentric relationship to the cross shaft 42 and the cross drive axis 24. The input gear 12 and the ring element 26 of the first planetary set 16 are connected to the hollow input shaft 66 at the right end thereof, and the sun element 48 of the third planetary set 44 is connected to the hollow input shaft at the left or opposite end thereof.

Preferably, a forward and reverse directional transmission unit 70 is connected to the input gear 12. This directional unit is adapted to longitudinally receive driving power from a prime mover or engine, not shown, via an input pinion gear 72. The input pinion gear is in intermeshing engagement with left and right annular bevel gears 74 and 76 which are independently and freely rotatably mounted with respect to a fixed housing 78 along a second transverse axis 80. Advantageously, left and right rotating clutch assemblies 82, 84 are operatively associated with these bevel gears to provide reverse and forward speed drive to an output gear 86 connected thereto. Although these clutch assemblies are only diagrammatically illustrated it is to be understood that they can be of conventional construction also, such as by including a plurality of interleaved plates and discs of the general type described earlier with respect to brake assemblies 54 and 56.

Particularly, when the forward rotating clutch assembly 84 is engaged, the right bevel gear 76 is directly connected to the output gear 86. On the other hand, when the reverse rotating clutch assembly 82 is engaged the left bevel gear 74 is connected to a central cross shaft 88 which extends freely within the bevel gears. This cross shaft is rotatably supported by the housing 78 via bearings 90 and is connected to the output gear 86 through an interconnecting member 92.

Turning now to the output sides of the multi-speed planetary differential 10, it may be noted that on the left side when viewing Fig. 1 the output ring element 34 is rotatably supported within the housing 58 by a bearing assembly 94. The ring element is splined as at 96 to drivingly receive the left output member 22. On the right side the output carrier element 30 is rotatably supported within the housing by another bearing assembly 98. The carrier element is likewise splined as at 100 to drivingly receive the right output member 20. What is of special note is that all rotating elements of the planetary differential 10 are supported concentrically on the axis 24 by means of only four bearing assemblies, namely, bearing assemblies 68, 68, 94 and 98.

As shown in phantom lines centrally of Fig. 3, the multi-speed planetary differential 10 can optionally include a direct drive in the multi-speed unit 14 by the addition of a rotating clutch assembly 102. In effect, when actuated, the rotating clutch assembly 102 connects the sun element 48 or the hollow input shaft 66 to the carrier element 50 for joint rotation so that the third planetary set rotates as a unit to provide a relatively high speed output drive to the opposite output members 20, 22.

A multi-speed unit 14′ is illustrated diagrammatically in Fig. 4, which is a variation of the multispeed unit 14 shown in Figs. 1—3. Those elements common to Figs. 1—3 are identified by similar reference numbers. Multi-speed unit 14′ differs by having third and fourth planetary sets 104 and 106, first and second brake assemblies 108 and 110, and first and second rotating clutch assemblies 112 and 114. This enables three separate speed reductions and a direct drive to be obtained. The third planetary set 104 includes ring, sun and carrier elements 116, 118 and 120 and a plurality of planet gears 122 intermeshingly connected to the ring and sun elements, and the fourth planetary set 106 includes ring, sun and carrier elements 124, 126 and 128 and a plurality of planet elements 130. The sun elements 118, 126 of the third and fourth planetary sets are connected together for joint rotation, and the carrier element 120 of the third planetary set is connected to the ring element 124 of the fourth planetary set and also to the carrier element 38 of the second planetary set for joint rotation.

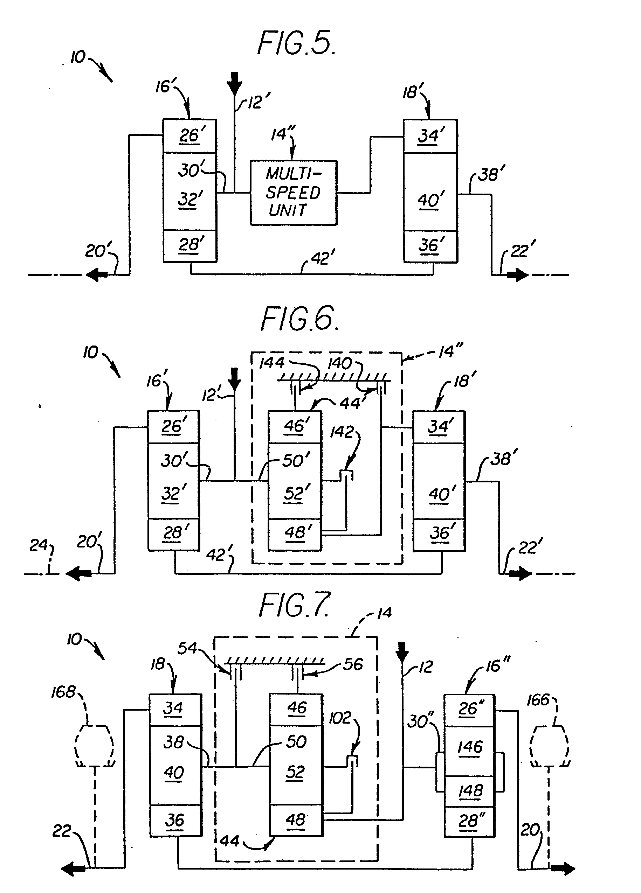

In Fig. 5, another basic embodiment of the multi-speed planetary differential 10 is illustrated wherein the input member 12′ has a different relationship to the first and second planetary sets 16′ and 18′ when compared with Fig. 2. Elements similar to Figs. 1—4 are identified with the same reference character with one or two prime indicators thereon. In this example the input member 12′ is connected to the carrier element 30′ of the first planetary set 16′ and to the multi-speed unit 14″. The output of the multi-speed unit is connected to the ring element 34′ of the second planetary set 18′. This provides a reduction somewhat less than that of Fig. 2.

A specific example of the generalized Fig. 5 construction is illustrated in Fig. 6. Here the multi-speed unit 14″ includes a third planetary set 44′ having ring, sun and carrier elements 46′, 48′, and 50′ and plurality of planet elements 52′. Input is by way of the jointly connected carrier elements 30′ and 50′. The sun element 48′ is connected to the ring element 34′ of the second planetary set, and a brake assembly 140 is associated therewith to provide a low speed. A rotating clutch assembly 142 is provided to connect the carrier element 50′ and the sun element 48′ together for joint rotation to effect an intermediate speed mode of operation. Lastly, a brake assembly 144 is provided to hold the ring element 46′ stationary to effect an overdrive or a high speed mode of operation.

An increased differential reduction is achieved in the example illustrated in Fig. 7, and while the planetary differential 10 bears a close resemblance to the construction of Fig. 3 it differs by utilizing a compound first planetary set 16″ having ring, sun and carrier elements 26″, 28″ and 30″ and first and second pluralities of intermeshing planet elements 146 and 148. The output to a pair of oppositely disposed vehicle wheels 166, 168 as is diagrammatically illustrated in broken lines is more symmetrical at the opposite ends of the differential as by way of the opposite ring elements 26″, 34 and the output members 20, 22. This is advantageous from an assembly or servicing standpoint.

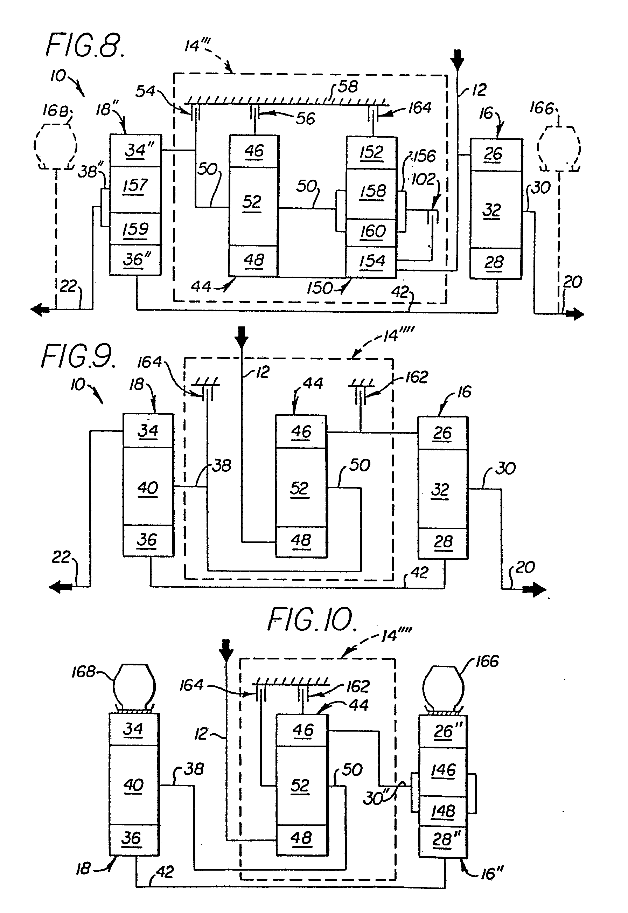

We also contemplate that the multi-speed unit 14 can be modified to provide a reverse mode of operation of the planetary differential. Fig. 8 shows a three speed forward planetary differential with an added reverse speed. The multi-speed unit 14‴ thereof advantageously includes a compound fourth planetary set 150 having ring, sun and carrier elements 152, 154 and 156 and first and second pluralities of intermeshing planet elements 158 and 160. The carrier elements 50 and 156 of the third and fourth planetary sets 44 and 150 are connected together for joint rotation, the sun elements 48 and 154 are connected together for joint rotation, the brake assemblies 54 and 56 provide low and intermediate speed reductions respectively, and the rotating clutch assembly 102 provides high speed. In this instance reverse is achieved by the engagement of another brake assembly 164 that can selectively connect the ring element 152 to the cross drive housing 58.

Another feature of the Fig. 8 construction is that the second planetary set 18" is also a compound set having first and second pluralities of intermeshing planet elements 157 and 159. The ring element 34" thereof is connected for joint rotation with the common carrier elements 50 and 156 of the third and fourth planetary sets, and is stopped to provide a reaction when the brake assembly 54 is actuated. Advantageously, the carrier element 38" of the second planetary set rotates with the output member 22 in a manner symmetrical with the carrier element 30 of the first planetary set 16 which rotates with the output member 20. The vehicle wheels 166, 168 can be compactly connected to the respective carrier element 30, 38" for joint rotation. This can be desirable from an assembly or common serviceability standpoint.

We further contemplate a forward and reverse planetary differential 10 of the type illustrated in Fig. 9. While such construction does not have a plurality of speeds in a single direction, it does have two separate modes of operation. It can be appreciated from this illustration that the phrase "providing multi-speed capability" as defined herein can include a differential capable of driving the opposite output members 20, 22 in the same rotation direction in at least two forward speeds or at least one speed forward and one speed reverse. The sun elements 28, 36 of the first and second planetary sets 16, 18 are connected for joint rotation, the ring elements 26, 46 of the first and third planetary sets 16, 44 are connected together for joint rotation, and the carrier elements 38, 50 of the second and third planetary sets are connected together for joint rotation. Advantageously, first and second brake assemblies 162 and 164 alternately provide the forward and reverse modes of operation respectively. When actuated, the first brake assembly 162 stops rotation of the ring elements 26, 46 and provides a reaction thereby, whereas when actuated, the second brake assembly 164 stops rotation of the carrier elements 38, 50 and provides a separate reaction thereby.

Fig. 10 illustrates a variation of the Fig. 9 construction that offers compactness in a wheel tyred vehicle. The second and third planetary sets 18, 44 are similar to Fig. 9, but the first planet set 16" has first and second pluralities of planet elements 146, 148 in much the same way as set forth above in connection with Fig. 7. The carrier element 30" of the first planet set is connected to the ring element 46 for joint rotation, and stopping of the ring element 46 by actuation of the first brake assembly 162 provides forward rotation of the opposite wheels or tyres 166 and 168 secured to rotate with the opposite ring elements 26" and 34 respectively. Stopping of the carrier element 50 and carrier element 38 as a unit by actuation of the second brake assembly 164 provides reverse drive. In this example each of the tyres 166, 168 circumscribes or closely encircles one of the ring elements 26", 34 to provide a particularly compact and substantially direct and transversely centered interconnection.

The multi-speed planetary differential 10 is expected to find its greatest utility in a fork lift truck, automobile, or the like, wherein the single input member 12 is powered by an engine and, if needed, via an intermediate transmission. Advantageously, substantially equal torque is delivered at all times to the opposite drive wheels of the vehicle by virtue of a preselected relationship between the first and second planetary sets 16, 18. Such equal torque division provides directional stability when driving, and yet the differential function permits the wheels 166, 168 to be operated at different rotational speeds in the same direction for vehicle turning or for wheel slippage under adverse traction conditions.

True differential action is obtained in the multi-speed planetary differential 10 by establishing the number of teeth in the rotating elements of the first and second planetary sets 16, 18 at preselected values. More specifically, this is accomplished for simple planetary systems wherein the stated planetary sets have only a single plurality of planetary gears by selecting the ratio of the number of teeth of the ring element divided by the number of teeth of the sun element, hereinafter called the e value, such that the e value for the first planetary set 16 is equal to the e value for the second planetary set 18 minus one. For example, in the construction of Figs. 1 and 3, the number of teeth in the first planetary set ring and sun elements 26, 28 respectively can be 72 and 36, which results in an e value of 2. The number of teeth in the second planetary set ring and sun elements 34 and 36 can be 72 and 24, which results in an e value of 3. With these relationships, assume that the carrier element 38 of the second planetary set of Fig. 3 is held stationary and that the ring element 26 of the first planetary set is driven at a preselected speed. Then, under these conditions, the carrier element 30 of the first planetary set and the ring element 34 of the second planetary set will rotate at one-third of that preselected speed and in the same rotational direction as the input when viewing along the axis 24.

Thus, it can be appreciated that in operation of the Figs. 1 and 3 embodiment, the actuation or engagement of the first brake assembly 54 will stop rotation of carrier element 50 and integrally associated carrier element 38 to achieve a gear reduction level of 3. That is, the output members 20, 22 will rotate at one third the speed of the input member 12 and in the same rotational direction, and the torque level at each of the output members will be 1-1/2 times the input torque level.

The engagement of the second brake assembly 56 will stop rotation of the ring element 46 to give a preselected reduction level. In the instant example, the number of teeth of the ring and sun elements 46, 48 of the third planetary set 44 are 72 and 36 respectively, to give an e value of 2. With such relationships the torque level at each of the output members 20, 22 will be about 0.9 times the input torque level, or in other words a reduction level of 1.8 is obtained.

Lastly, the engagement of rotating clutch assembly 102 in Fig. 3 will couple the carrier and sun elements 50 and 48 for joint rotation such that if the input member 12 is rotated at a preselected speed, then the output members 20, 22 will be driven at the same preselected speed for a speed reduction level of one. Also, the output members will furnish one-half of the input torque level to the wheels.

Turning next to the embodiment illustrated in Fig. 4, low or first speed is obtained by simultaneous engagement of brake assemblies 108 and 110. This can give a reduction level of 3. Second speed is obtained by simultaneous engagement of brake assembly 110 and rotating clutch assembly 112. This can give a reduction level of 1.667. Third speed is obtained by simultaneous engagement of brake assembly 108 and rotating clutch assembly 112 to give a reduction level of 1.286. And, with simultaneous engagement of rotating clutch assemblies 112 and 114, fourth speed is obtained with the planetary elements rotating as a unit to provide a speed reduction level of one. This advantageously provides fairly close step ratios at the upper speed end of the operating range.

In Fig. 6, the multi-speed unit 14″ provides low, intermediate and high speeds by the individual engagement of brake assembly 140, rotating clutch assembly 142 and brake assembly 144 respectively. In such example, the respective reductions are 1.5, 1.0 and 0.6. Thus, the high speed mode of operation is not a true reduction, but an overdrive.

In Fig. 7 the operation is like the Fig. 3 embodiment, with the engagement of brake assembly 54 providing first speed and a reduction of 3.6. The actuation of brake assembly 56 gives a reduction of 1.93 for second speed. And the engagement of rotating clutch assembly 102 provides a speed reduction level of one or unity for third gear. The first planetary set 16″ in this instance has what we define as a negative e value because of the dual planetary elements 146 and 148. When one of the planetary sets 16, 18 is of such compound or dual planetary construction, and the other one is of simple construction, true differential action can usually be obtained by establishing the e values for both sets at the same absolute value.

Fig. 8 can provide first, second and third speeds by the individual engagement of brake assembly 54, which stops rotation of ring element 34″ and carrier element 50, brake assembly 56 which stops rotation of ring element 46, and rotating clutch assembly 102 which links the sun and carrier elements 154, 156 together for joint rotation. Reverse is obtained by the actuation of the brake assembly 164 to stop the rotation of the ring element 152 of the planetary set 150 which has dual planetary elements 158, 160. Reduction levels of 3.0, 1.8 and 1.0 can be obtained in the three forward speeds, and a reduction level of 3.0 can be obtained in reverse. In this example the respective e values for the various planetary sets are −4, +2, −2 and +2 reading from left to right when viewing Fig. 8.

In Fig. 9, if the e values of the first, second and third planetary sets 16, 18 and 44 are 2.0, 3.0 and 1.8 respectively, then the ratio of forward to reverse speed is about 1.286:1. In forward speed, corresponding to the engagement of brake assembly 162, one unit of torque delivered to the input member 12 can provide about 2.1 units of torque in the same rotational direction as the input member to each of the output members 20, 22, and one unit of speed delivered to the input member 12 can result in a speed reduction at the output members 20, 22 to about 0.24 units of such speed. In reverse, corresponding to engagement of brake assembly 164, the torque level at the output members 20, 22 can be about 2.7 times that of the input member 12, and the speed reduction can be about 0.185.

In operation, the Fig. 10 differential can be constructed to be like that of Fig. 9 insofar as the speed reduction levels and torque multiplication factors are concerned. For example, e values of −3.0, 3.0 and 1.8 for the planetary sets 16″, 18 and 44 respectively can provide the same torque magnification values of 2.1 and 2.7 in forward and reverse respectively.

Thus, it may be appreciated that the multi-speed planetary differential 10 of the present invention is compact and economical in construction, and the alignment of the principle elements thereof along a single transverse axis contributes to a relatively simple housing and rotary bearing system to support the elements. A true differential action is always available while propelling the vehicle in a plurality of speeds, and this is particularly advantageous in the cross drive of a vehicle having separate steering wheels. For example, the multi-speed planetary differential 10 is extremely useful for the rear driving portion of a lift truck, automobile or the like having steerable wheels on the front portion thereof.

**Claims**

1. A planetary differential (10) comprising first and second planetary sets (16, 18) each set having ring, sun and carrier elements (26, 28, 30, 34, 36, 38); first and second output members (20, 22) connected to first ones of the elements (26, 28, 30, 34, 36, 38) of the first and second planetary sets (16, 18) respectively, a second one of the elements (26, 28, 30) of the first planetary set (16) being connected for joint rotation to a second one of the elements (34, 36, 38) of the second planetary set (18); and a rotary input member (12), characterised by means (14) for driving the output members (20, 22) at substantially equal levels of torque in a plurality of speeds, the means (14) being driven by the rotary input member (12) and selectively or permanently driving the remaining third one of the elements (34, 36, 38) of the second planetary set (18) in at least one of the plurality of speeds, the remaining third one of the elements (26, 28, 30) of the first planetary set (16) being selectively or permanently driven by one of the input member (12) and the means (14) whereby true differential action is maintained.

2. A planetary differential (10) according to claim 1, characterised in that the sun elements (28, 36) of the first and second planetary sets (16, 18) are connected together for joint rotation.

3. A planetary differential (10) according to claim 1 or claim 2, characterized in that the means (14) includes a third planetary set (44) having ring, sun and carrier elements (46, 48, 50).

4. A planetary differential (10) according to claim 3, characterized in that the first (16), second (18), and third (44) planetary sets, and the first and second output members (20, 22) are mounted about a common axis.

5. A planetary differential (10) according to claim 3 or claim 4, characterized in that the input member (12) is connected to the sun element (48) of the third planetary set (44) for joint rotation.

6. A planetary differential (10) according to any of claims 2 to 4, characterised in that the input member (12) is connected to the ring element (26) of the first planetary set (16).

7. A planetary differential (10) according to any of claims 2 to 4, characterized in that the input member (12′) is connected to the carrier element (30′) of the first planetary set (16′).

8. A planetary differential (10) according to claim 7, characterized in that the means (14″) is connected to the ring element (34′) of the second planetary set (18′).

9. A planetary differential (10) according to at least claim 2 and claim 3, characterized in that the sun element (48) of the third planetary set (44) and the remaining one of the ring and carrier elements (26, 30) of the first planetary set (16) are connected together for joint rotation, the carrier element (50) of the third planetary set (44) being connected to rotate with and driving the remaining one of the ring and carrier elements (34, 38) of the second planetary set (18) in one speed.

10. A planetary differential (10) according to any of claims 2 to 4, characterized in that the input member (12′) is connected to the carrier element (50′) of the third planetary set (44′) for joint rotation.

11. A planetary differential (10) according to claim 10, characterized in that the means (14″) includes brake means (140) for stopping rotation of said sun element (48′) of the third planetary set (44′).

12. A planetary differential (10) according to claim 2 and claim 3, and any of claims 4 to 8, characterized in that the carrier elements (38, 50) of the second and third planetary sets (18, 44) are connected together for joint rotation.

13. A planetary differential (10) according to claim 2 and claim 3, and any of claims 4 to 8, characterized in that the ring elements (26, 46) of the first and third planetary sets (16, 44) are connected together for joint rotation.

14. A planetary differential (10) according to claim 2 and claim 3, and any of claims 4 to 8, 12, and 13, characterized in that the means (14) comprises a pair of brake assemblies (162, 164) for stopping rotation of the ring element (26) of the first planetary set (16), and the carrier element (38) of the second planetary set (18) respectively.

15. A planetary differential (10) according to claim 3, or any of claims 4 to 9 or 12 to 14, when dependent on claim 3, characterized in that the means (14) includes brake means (54) for stopping rotation of the carrier element (50) of the third planetary set (44).

16. A planetary differential (10) according to claim 3, or any of claims 4 to 15, when dependent on claim 3, characterized in that the means (14) includes brake means (56) for stopping rotation of the ring element (46) of the third planetary set (44).

17. A planetary differential (10) according to claim 3, or any of claims 4 to 16, when dependent on claim 3, characterized in that the means (14) includes clutch means (102) for connecting the sun element (48) and the carrier element (50) of the third planetary set (44) for joint rotation.

18. A planetary differential (10) according to any of the preceding claims, characterized in that the first planetary set (16″) has first and second pluralities of planet elements (146, 148).

19. A planetary differential (10) according to claim 7, when dependent on claim 2, characterized in that the ring elements (26″, 34) of the first and second planetary sets (16″, 18) are connected to the first and second output members (20, 22) respectively.

20. A planetary differential (10) according to claim 3, or any of claims 4 to 19, when dependent on claim 3, characterized in that the means (14′) further includes a fourth planetary set (106) having ring, sun and carrier elements (124, 126, 128).

21. A planetary differential (10) according to claim 20, when dependent on claim 2, characterized in that the sun elements (118, 126) of the third and fourth planetary sets (104, 106) are connected together for joint rotation.

22. A planetary differential (10) according to claim 20 or claim 21, characterized in that the means (14') further includes brake means (110) for stopping rotation of the carrier element (128) of the fourth planetary set (106).

23. A planetary differential (10) according to any of claims 20 to 22, characterized in that the means (14') further includes clutch means (114) for selectively coupling the sun elements (118, 126) of the third and fourth planetary sets (104, 106) to the ring element (26) of the first planetary set (16) for joint rotation.

24. A planetary differential (10) according to any of claims 20 to 23, characterized in that the means (14') further includes clutch means (112) for selectively coupling the ring element (116) of the third planetary set (104) to the ring element (26) of the first planetary set (16).

25. A planetary differential (10) according to any of claims 20 to 24, when dependent on claim 4 or any of claims 6 to 19, characterized in that the means (14') further includes brake means (108) for stopping rotation of the sun elements (118, 126) of the third and fourth planetary sets (104, 106).

26. A planetary differential (10) according to any of the preceding claims, characterized in that the means (14″) further includes gear means (150, 164) for providing a reverse mode of operation of the first and second output members (20, 22).

27. A planetary differential (10) according to claim 26, characterized in that the gear means (150, 164) comprises another planetary set (150) having ring, sun and carrier elements (152, 154, 156), and first and second pluralities of intermeshing planet elements (158, 160).

28. A planetary differential (10) according to claim 27, wherein the gear means (150, 164) includes brake means (164) for stopping rotation of the ring element (152) of the another planetary set (150).

29. A planetary differential (10) according to any of the preceding claims, characterized in that the first planetary set (16″) has first and second pluralities of intermeshing planet elements (146, 148).

**Patentansprüche**

1. Planetendifferential (10) mit ersten und zweiten Planetensätzen (16, 18), wobei jeder Satz Ring-, Sonne- und Trägerelemente (26, 28, 30, 34, 36, 38) aufweist, ersten und zweiten Ausgangsgliedern (20, 22) verbunden mit den ersten der Elemente (26, 28, 30, 34, 36, 38) der ersten bzw. zweiten Planetensatze, (16, 18) wobei ein zweites der Elemente (26, 28, 30) des ersten Planetensatzes (16) zur gemeinsamen Drehung mit einem zweiten der Elemente (34, 36, 38) des zweiten Planetensatzes (18) verbunden ist, und mit einem Dreheingangsglied (12), gekennzeichnet durch Mittel (14) zum Antrieb der Ausgangsglieder (20, 22) mit im wesentlichen gleichen Drehmomentniveaus in einer Vielzahl von Drehzahlen, wobei die Mittel (14) durch das Dreheingangsglied (12) angetrieben werden und selektiv oder permanent das verbleibende dritte der Elemente (34, 36, 38) des zweiten Planetensatzes (18) in mindestens einer der Vielzahl von Drehzahlen antreiben, und wobei das verbleibende dritte der Elemente (26, 28, 30) des ersten Planetensatzes (16) selektiv oder permanent durch eines der Eingangsglieder (12) und die Mittel (14) angetrieben wird, wodurch die echte Differentialwirkung aufrecht erhalten bleibt.

2. Planetendifferential (10) nach Anspruch 1, dadurch gekennzeichnet, daß die Sonnenelemente (28, 36) der ersten und zweiten Planetensätze (16, 18) miteinander zur gemeinsamen Drehung verbunden sind.

3. Planetendifferential (10) nach Anspruch 1 oder 2, dadurch gekennzeichnet, daß die Mittel (14) einen dritten Planetensatz (44) mit Ring-, Sonnen- und Trägerelementen (46, 48, 50) aufweisen.

4. Planetendifferential (10) nach Anspruch 3, dadurch gekennzeichnet, daß die ersten (16), zweiten (18) und dritten (44) Planetensätze und die ersten und zweiten Ausgangsglieder (20, 22) um eine gemeinsame Achse gelagert sind.

5. Planetendifferential (10) nach Anspruch 3 oder 4, dadurch gekennzeichnet, daß das Eingangsglied (12) mit dem Sonnenelement (48) des dritten Planetensatzes (44) zur gemeinsamen Drehung verbunden ist.

6. Planetendifferential (10) nach einem der Ansprüche 2 bis 4, dadurch gekennzeichnet, daß das Eingangsglied (12) mit dem Ringelement (26) des ersten Planetensatzes (16) verbunden ist.

7. Planetendifferential (10) nach einem der Ansprüche 2 bis 4, dadurch gekennzeichnet, daß das Eingangsglied (12') mit dem Trägerelement (30') des ersten Planetensatzes (16') verbunden ist.

8. Planetendifferential (10) nach Anspruch 7, dadurch gekennzeichnet, daß die Mittel (14″) mit dem Ringelement (34') des zweiten Planetensatzes (18') verbunden sind.

9. Planetendifferential (10) nach mindestens Anspruch 2 und 3, dadurch gekennzeichnet, daß das Sonnenelement (48) des dritten Planetensatzes (44) und das verbleibende der Ring- und Trägerelemente (26, 30) des ersten Planetensatzes (16) miteinander zur gemeinsamen Drehung verbunden sind, wobei das Trägerelement (50) des dritten Planetensatzes (44) zur Drehung und zum Antrieb mit dem verbleibenden einen Element der Ring- und Trägerelemente (34, 38) des zweiten Planetensatzes (18) in einer Drehzahl verbunden ist.

10. Planetendifferential (10) nach einem der Ansprüche 2 bis 4, dadurch gekennzeichnet, daß das Eingangsglied (12') mit dem Trägerelement (50') des dritten Planetensatzes (44') zur gemeinsamen Drehung verbunden ist.

11. Planetendifferential (10) nach Anspruch 10, dadurch gekennzeichnet, daß die Mittel (14″) Bremsmittel (140) aufweisen, um die Drehung des Sonnenelements (48′) des dritten Planetensatzes (44′) zu stoppen.

12. Planetendifferential (10) nach Anspruch 2 und Anspruch 3 und irgendeinem der Ansprüche 4 bis 8, dadurch gekennzeichnet, daß die Trägerelement (38, 50) der zweiten und dritten Planetensätze (18, 44) miteinander zur gemeinsamen Drehung verbunden sind.

13. Planetendifferential (10) nach Anspruch 2 und Anspruch 3 und irgendeinem der Ansprüche 4 bis 8, dadurch gekennzeichnet, daß die Ringelemente (26, 46) der ersten und dritten Planetensätze (16, 44) miteinander zur gemeinsamen Drehung verbunden sind.

14. Planetendifferential (10) nach Anspruch 2 und Anspruch 3 und irgendeinem der Ansprüche 4 bis 8, 12 und 13, dadurch gekennzeichnet, daß die Mittel (14) ein Paar von Bremsanordnungen (162, 164) aufweisen, um die Drehung des Ringelements (26) des ersten Planetensatzes (16) bzw. des Trägerelements (38) des zweiten Planetensatzes (18) zu stoppen.

15. Planetendifferential (10) nach Anspruch 3 oder irgendeinem der Ansprüche 4 bis 9 oder 12 bis 14 bei Abhängigkeit von Anspruch 3, dadurch gekennzeichnet, daß die Mittel (14) Bremsmittel (54) aufweisen, um die Drehung des Trägerelements (50) des dritten Planetensatzes (44) zu stoppen.

16. Planetendifferential (10) nach Anspruch 3 oder irgendeinem der Ansprüche 4 bis 15 bei Abhängigkeit von Anspruch 3, dadurch gekennzeichnet, daß die Mittel (14) Bremsmittel (56) aufweisen, um die Drehung des Ringelements (46) des dritten Planetensatzes (44) zu stoppen.

17. Planetendifferential (10) nach Anspruch 3 oder irgendeinem der Ansprüche 4 bis 16 bei Abhängigkeit von Anspruch 3, dadurch gekennzeichnet, daß die Mittel (14) Kupplungsmittel (102) aufweisen zur Verbindung des Sonnenelements (48) und des Trägerelements (50) des dritten Planetensatzes (44) zur gemeinsamen Drehung.

18. Planetendifferential (10) nach einem der vorhergehenden Ansprüche, dadurch gekennzeichnet, daß der erste Planetensatz (16″) erste und zweite Vielzahlen von Planetenelementen (146, 148) aufweist.

19. Planetendifferential (10) nach Anspruch 7 bei Abhängigkeit von Anspruch 2, dadurch gekennzeichnet, daß die Ringelemente (26″, 34) der ersten und zweiten Planetensätze (16″, 18) mit den ersten bzw. zweiten Ausgangsgliedern (20, 22) verbunden sind.

20. Planetendifferential (10) nach Anspruch 3 oder irgendeinem der Ansprüche 4 bis 19 bei Abhängigkeit von Anspruch 3, dadurch gekennzeichnet, daß die Mittel (14′) ferner einen vierten Planetensatz (106) aufweisen, und zwar mit Ring-, Sonnen- und Trägerelementen (124, 126, 128).

21. Planetendifferential (10) nach Anspruch 20 bei Abhängigkeit von Anspruch 2, dadurch gekennzeichnet, daß die Sonnenelemente (118, 126) der dritten und vierten Planetensätze (104, 106) miteinander zur gemeinsamen Drehung verbunden sind.

22. Planetendifferential (10) nach Anspruch 20 oder Anspruch 21, dadurch gekennzeichnet, daß die Mittel (14′) ferner Bremsmittel (110) aufweisen, um die Drehung des Trägerelements (128) des vierten Planetensatzes (106) zu stoppen.

23. Planetendifferential (10) nach einem der Ansprüche 20 bis 22, dadurch gekennzeichnet, daß die Mittel (14′) ferner Kupplungsmittel (114) aufweisen, um selektiv die Sonnenelemente (118, 126) des dritten und vierten Planetensatzes (104, 106) mit dem Ringelement (26) des ersten Planetensatzes (16) zur gemeinsamen Drehung zu kuppeln.

24. Planetendifferential (10) nach einem der Ansprüche 20 bis 23, dadurch gekennzeichnet, daß die Mittel (14′) ferner Kupplungsmittel (112) aufweisen, um in selektiver Weise das Ringelement (116) des dritten Planetensatzes (104) mit dem Ringelement (26) des ersten Planetensatzes (16) zu kuppeln.

25. Planetendifferential (10) nach einem der Ansprüche 20 bis 24 bei Abhängigkeit von Anspruch 4 oder irgendeinem der Ansprüche 6 bis 19, dadurch gekennzeichnet, daß die Mittel (14′) ferner Bremsmittel (108) aufweisen, um die Drehung der Sonnenelemente (118, 126) der dritten und vierten Planetensätze (104, 106) zu stoppen.

26. Planetendifferential (10) nach einem der vorhergehenden Ansprüche, dadurch gekennzeichnet, daß die Mittel (14″) ferner Getriebemittel (150, 164) aufweisen, um eine Unkehrbetriebsart der ersten und zweiten Ausgangsglieder (20, 22) vorzusehen.

27. Planetendifferential (10) nach Anspruch 26, dadurch gekennzeichnet, daß die Getriebemittel (150, 164) einen weiteren Planetensatz (150) mit Ring-, Sonnen- und Trägerelementen (152, 154, 156) aufweisen, und mit ersten und zweiten Vielzahlen von miteinander kämmenden Planetenelementen (158, 160).

28. Planetendifferential (10) nach Anspruch 27, wobei die Getriebemittel (150, 164) Bremsmittel (164) aufweisen, um die Drehung des Ringelements (152) des anderen Planetensatzes (150) zu stoppen.

29. Planetendifferential (10) nach einem der vorhergehenden Ansprüche, dadurch gekennzeichnet, daß der erste Planetensatz (16″) erste und zweite Vielzahlen von miteinander kämmenden Planetenelementen (146, 148) aufweist.

## Revendications

1. Différentiel à satellites (10) comprenant un premier et un second groupes de satellites (16, 18), chaque groupe ayant une couronne, un planétaire et un porte-satellites (26, 28, 30, 34, 36, 38); un premier et un second organes de sortie (20, 22) reliés à un premier des éléments (26, 28, 30, 34, 36, 38) du premier et du second groupes de satellites (16, 18) respectivement, un second des éléments (26, 28, 30) du premier groupe de satellites (16) étant relié pour une rotation conjointe à un second des éléments (34, 36, 38) du second groupe de satellites (18); et un organe d'entrée rotatif (12), caractérisé par des moyens (14) pour entraîner les organes de sortie (20, 22) à des couples ayant des niveaux sensiblement égaux suivant plusieurs vitesses, les moyens (14) étant entraînés par l'organe d'entrée rotatif (12) et entraînant sélectivement ou en permanence le troisième élément restant (34, 36, 38) du second groupe de satellites (18) à l'une au moins de ces vitesses, le troisième élément restant (26, 28, 30) du premier groupe de satellites (16) étant sélectivement ou en permanence entraîné par l'organe d'entrée (12) ou par les moyens (14), ce qui fait qu'une véritable action différentielle est maintenue.

2. Différentiel (10) selon la revendication 1, caractérisé en ce que les planétaires (28, 36) du premier et du second groupes de satellites (16, 18) sont reliés ensemble pour une rotation conjointe.

3. Différentiel (10) selon la revendication 1 ou 2, caractérisé en ce que les moyens (14) comprennent un troisième groupe de satellites (44) ayant une couronne, un planétaire et un porte-satellites (46, 48, 50).

4. Différentiel (10) selon la revendication 3, caractérisé en ce que le premier (16), le second (18) et le troisième (44) groupes de satellites, et le premier et le second organes de sortie (20, 22) sont montés autour d'un axe commun.

5. Différentiel (10) selon la revendication 3 ou 4, caractérisé en ce que l'organe d'entrée (12) est relié au planétaire (48) du troisième groupe de satellites (44) pour une rotation conjointe.

6. Différentiel (10) selon l'une quelconque des revendications 2 à 4, caractérisé en ce que l'organe d'entrée (12) est relié à la couronne (26) du premier groupe de satellites (16).

7. Différentiel (10) selon l'une quelconque des revendications 2 à 4, caractérisé en ce que l'organe d'entrée (12') est relié au portesatellites (30') du premier groupe de satellites (16').

8. Différentiel (10) selon la revendication 7, caractérisé en ce que les moyens (14") sont reliés à la couronne (34') du second groupe de satellites (18').

9. Différentiel (10) selon au moins la revendication 2 et la revendication 3, caractérisé en ce que le planétaire (48) du troisième groupe de satellites (44) et le composant restant de la couronne ou du porte-satellites (26, 30) du premier groupe de satellites (16) sont reliés ensemble pour une rotation conjointe, le porte-satellites (50) du troisième groupe (44) étant relié pour tourner avec et pour entraîner le composant restant de la couronne et du portesatellites (34, 38) du second groupe de satellites (18), à une certaine vitesse.

10. Différentiel (10) selon l'une quelconque des revendications 2 à 4, caractérisée en ce que l'organe d'entrée (12') est relié au portesatellites (50') du troisième groupe de satellites (44') pour une rotation conjointe.

11. Différentiel (10) selon la revendication 10, caractérisé en ce que les moyens (14") comprennent un frein (140) pour arrêter la rotation du planétaire (48') du troisième groupe de satellites (44').

12. Différentiel (10) selon la revendication 2 et la revendication 3, et l'une quelconque des revendications 4 à 8, caractérisé en ce que les porte-satellites (38, 50) du second et du troisième groupes de satellites (18, 44) sont reliés ensemble pour une rotation conjointe.

13. Différentiel (10) selon la revendication 2 et la revendication 3, et l'une quelconque des revendications 4 à 8, caractérisé en ce que les couronnes (26, 46) du premier et du troisième groupes de satellites (16, 44) sont reliées ensemble pour une rotation conjointe.

14. Différentiel (10) selon la revendication 2 et la revendication 3, et l'une quelconque des revendications 4 à 8, 12 et 13, caractérisé en ce que les moyens (14) comprennent deux freins (162, 164) pour arrêter la rotation de la couronne (26) du premier groupe de satellites (16) et le porte-satellites (38) du second groupe de satellites (18), respectivement.

15. Différentiel (10) selon la revendication 3 ou l'une quelconque des revendications 4 à 9 ou 12 à 14, lorsqu'elles dépendent de la revendication 3, caractérisé en ce que les moyens (14) comprennent un frein (54) pour arrêter la rotation du porte-satellites (50) du troisème groupe de satellites (44).

16. Différentiel (10) selon la revendication 3 ou l'une quelconque des revendications 4 à 15, lorsqu'elles dépendent de la revendication 3, caractérisé en ce que les moyens (14) comprennent un frein (56) pour arrêter la rotation de la couronne (46) du troisième groupe de satellites (44).

17. Différentiel (10) selon la revendication 3 ou l'une quelconque des revendications 4 à 16 lorsqu'elles dépendent de la revendication 3, caractérisé en ce que les moyens (14) comprennent un embrayage (102) pour relier le planétaire (48) et le porte-satellites (50) du troisième groupe de satellites (44) pour une rotation conjointe.

18. Différentiel (10) selon l'une quelconque des revendications précédentes, caractérisé en ce que le premier groupe de satellites (16") a un premier et un second ensembles de satellites (146, 148).

19. Différentiel (10) selon la revendication 7, lorsqu'elle est dépendante de la revendication 2, caractérisé en ce que les couronnes (26", 34) du premier et du second groupes de satellites (16", 18) sont reliées respectivement aux-premier et second organes de sortie (20, 22).

20. Différentiel (10) selon la revendication 3 ou l'une quelconque des revendications 4 à 19, lorsqu'elles dépendent de la revendication 3, caractérisé en ce que les moyens (14') comprennent en outre un quatrième groupe de satellites (106) ayant une couronne, un planétaire et un portesatellites (124, 126, 128).

21. Différentiel (10) selon la revendication 20, lorsqu'elle est dépendante de la revendication 2, caractérisé en ce que les planétaires (118, 126) du troisième et du quatrième groupes de satellites (104, 106) sont reliés ensemble pour une rotation conjointe.

22. Différentiel (10) selon la revendication 20 ou la revendication 21, caractérisé en ce que les moyens (14') comprennent en outre un frein (110) pour arrêter la rotation du porte-satellites (128) du quatrième groupe de satellites (106).

23. Différentiel (10) selon l'une quelconque des revendications 20 à 22, caractérisé en ce que les moyens (14') comprennent en outre un embrayage (114) pour coupler sélectivement les planétaires (118, 126) du troisième et du quatrième groupes de satellites (104, 106) à la couronne (26) du premier groupe (16) pour une rotation conjointe.

24. Différentiel (10) selon l'une quelconque des revendications 20 à 23, caractérisé en ce que les moyens (14') comprennent en outre un embrayage (112) pour coupler sélectivement la couronne (116) du troisième groupe de satellites (104) à la couronne (26) du premier groupe (16).

25. Différentiel (10) selon l'une quelconque des revendications 20 à 24, lorsqu'elles dépendent de la revendication 4 ou de l'une quelconque des revendications 6 à 19, caractérisé en ce que les moyens (14') comprennent en outre un frein (108) pour arrêter la rotation des planétaires (118, 126) du troisième et du quatrième groupes de satellites (104, 106).

26. Différentiel (10) selon l'une quelconque des revendications précédentes, caractérisé en ce que les moyens (14") comprennent en outre un engrenage (150, 164) pour produire un mode de fonctionnement arrière du premier et du second organes de sortie (20, 22).

27. Différentiel (10) selon la revendication 26, caractérisé en ce que l'engrenage (150, 164) comprend un autre groupe de satellites (150) ayant une couronne, un planétaire et un porte-satellites (152, 154, 156), et un premier et un second ensembles de satellites engrenants (158, 160).

28. Différentiel (10) selon la revendication 27, caractérisé en ce que l'engrenage (150, 164) comprend un frein (164) pour arrêter la rotation de la couronne (152) d'un autre groupe de satellites (150).

29. Différentiel (10) selon l'une quelconque des revendications précédentes, caractérisé en ce que le premier groupe de satellites (16") a un premier et un second ensembles de satellites engrenants (146, 148).

FIG.1.

# FIG.2.

# FIG.3.

# FIG.4.

FIG.5.

FIG.6.

FIG.7.

FIG.8.

FIG.9.

FIG.10.